# EUROPEAN PATENT SPECIFICATION

(11) **EP 3 082 299 B1**
(45) Date of publication and mention of the grant of the patent: **02.03.2022**
(21) Application number: 16151333.8
(22) Date of filing: 14.01.2016
(51) Int. Cl.: H04L 12/28, H04L 12/26, H04W 4/00

(54) **METHOD, TERMINAL AND COMPUTER PROGRAM FOR DETECTING THE STATE OF A NETWORK CHANNEL BETWEEN A SMART DEVICE AND AN IOT SERVER**
VERFAHREN, VORRICHTUNG UND COMPUTERPROGRAMM ZUR ERFASSUNG DES ZUSTANDS EINES NETZWERKKANALS ZWISCHEN EINEM SMART DEVICE UND EINEM IOT-SERVER
PROCÉDÉ, TERMINAL ET PROGRAMME INFORMATIQUE DE DÉTECTION DE L'ÉTAT D'UN CANAL RÉSEAU ENTRE UN DISPOSITIF INTELLIGENT ET UN SERVEUR IOT

(30) Priority: 16.04.2015 CN 201510181723
(43) Date of publication of application: 19.10.2016
(73) Proprietor: Xiaomi Inc., Beijing 100085 (CN)
(72) Inventor: DING, Yi, 100085 Haidian District (CN); ZHANG, Yanlu, 100085 Haidian District (CN); HOU, Enxing, 100085 Haidian District (CN)
(74) Representative: Reeve, Nicholas Edward

(56) References cited:
- WO-A1-02/099683
- CN-A- 104 407 592
- CN-U- 202 077 192
- US-A1- 2014 379 894

## Description

### TECHNICAL FIELD

The present disclosure generally relates to the technical field of smart homes, and more particularly, to a method and an apparatus for detecting a state of a networking channel and an electronic device.

### BACKGROUND

The Internet of Things (IoT) is a huge network formed by combination of various information sensing devices and the Internet so that all the objects are connected to the network to facilitate identification and management. For example, if a smart device (for example, a smart home appliance) is connected to the IoT, a user may perform a remote smart control on smart devices to experience a real smart home.

CN104407592 discloses a method and apparatus for adjusting operational status of a smart home device. WO02/099683 discloses a technique for controlling networked appliances. US2014/0379894A1 discloses a method of testing connectivity using different locations and contexts selected from different possible failure zones. The zones may include: client failure zones; internet failure zones; and online service failure zones. The results relating to different connectivity tests are correlated and analyzed in an attempt to determine a root cause of the connectivity issue. CN202077192 discloses a standard verification test platform of transducer network information process support service, which can verify and test the consistency and conformity of the relevant protocol of the network.

### SUMMARY OF THE INVENTION

The present invention is defined by the appended independent claims. Dependent claims constitute embodiments of the invention.

The present disclosure provides a method and an apparatus for detecting a state of a networking channel and an electronic device to overcome insufficiency in related arts.

According to a first aspect of embodiments of the present disclosure, there is provided a method, performed by a terminal, for detecting a state of a networking channel between a smart device and an IoT server, wherein the IoT server is a server to which a user can log in, using the terminal, for connecting to the smart device. The method includes: selecting a smart device by sending a control instruction from the terminal to the IoT server to realize control of any one smart device and recording the any one smart device as the selected smart device if the control instruction is not accomplished; selecting a control protocol employed by the selected smart device, and accessing, using the control protocol, the IoT server via a networking channel employed by the selected smart device, such that the terminal simulates an interaction between the selected smart device and the server; and collecting a state of the networking channel during accessing, and presenting the collected state on a screen of the terminal.

Optionally, the networking channel includes a local network channel with a local router device, and a cloud end network channel between the local router device and the IoT server.

Optionally, the state of the networking channel includes at least one of the following: an establishment result of a connection with a local network established by the local router device; information on network states of the local network; open states of access ports to the IoT server on the local router device; and response states of the server.

Optionally, the method further includes: detecting a real-time network environment; and if the networking channel employed by the smart device to be detected is reachable under the real-time network environment, performing detection prompt on the networking channel.

According to a second aspect of embodiments of the present disclosure, there is provided a terminal for detecting a state of a networking channel between a smart device and an IoT server, wherein the IoT server is a server to which a user can log in, using the terminal, for connecting to the smart device. The terminal includes: a determining unit configured to select a smart device; wherein the terminal comprises a sending unit configured to send a control instruction from the terminal to the IoT server to realize control of any one smart device; and a recording unit configured to, according to a control result returned by the IoT server, if the control instruction is not accomplished, record the any one smart device as the selected smart device; an accessing unit configured to select a control protocol employed by the smart device to be detected, and access, using the control protocol, the IoT server via a networking channel employed by the selected smart device, such that the terminal simulates an interaction between the smart device and the IoT server; and a presenting unit configured to collect a state of the networking channel during accessing, and present the collected state on a screen of the terminal.

Optionally, the networking channel includes a local network channel with a local router device, and a cloud end network channel between the local router device and the IoT server.

Optionally, the state of the networking channel includes at least one of the following: an establishment result of a connection with a local network established by the local router device; information on network states of the local network; open states of access ports to the IoT server on the local router device; and response states of the IoT server.

Optionally, the apparatus further includes: a detecting unit configured to detect a real-time network environment; and a prompting unit configured to, if the networking channel employed by the smart device is reachable under the real-time network environment, perform detection prompt on the networking channel.

According to a third aspect of embodiments of the present disclosure, there is provided a computer program stored on a computer readable medium, which when executed, is configured to perform any one of the above methods.

The technical solutions provided by embodiments of the present disclosure may have the following advantageous effects: in the present disclosure, the accessing of a smart device to an server is simulated on a terminal, and the state of a networking channel during the accessing may be presented on a screen of the terminal. Thus, a user may visually view the problems which the networking channel may encounter with, and thereby the insufficiency that a smart device cannot present information on the state of the networking channel may be repaired to improve user's use experience.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a structure diagram showing an IoT.
Fig. 2 is a flowchart showing a method for detecting a state of a networking channel according to an exemplary embodiment.
Fig. 3 is a flowchart showing a method for detecting a state of a networking channel according to another exemplary embodiment.
Figs. 4 to 8 arc schematic diagrams showing terminal interfaces according to another exemplary embodiment.
Fig. 9 is a block diagram showing an apparatus for detecting a state of a networking channel according to another exemplary embodiment.
Fig. 10 is a block diagram showing an apparatus for detecting a state of a networking channel according to another exemplary embodiment.
Fig. 11 is a block diagram showing an apparatus for detecting a state of a networking channel according to another exemplary embodiment.
Fig. 12 is a block diagram showing a structure of an apparatus for detecting a state of a networking channel according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

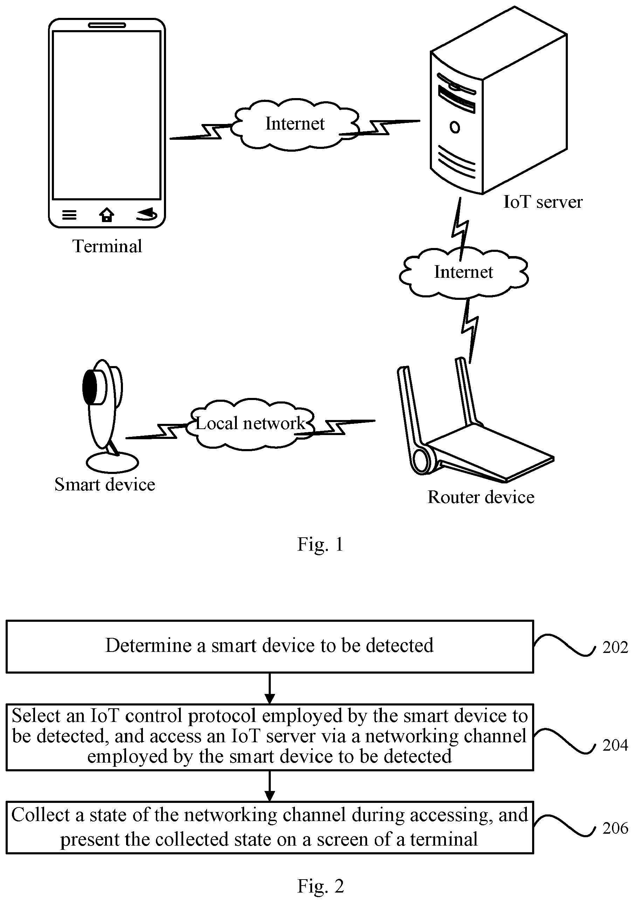

Fig. 1 is a structure diagram showing an IoT. As shown in Fig. 1, taking a "smart camera" as an example, a smart device may join into a local network established by a router device so as to be connected to the Internet via the router device to access a remote IoT server. Thus, it can be seen that a "networking channel" is formed between the smart device and the IoT server.

When the networking channel is in a normal state, the smart device may successfully establish a remote connection with the IoT server, and a user may log in the IoT server via terminals capable of accessing the Internet such as a mobile phone or a computer, and then send control instructions to the smart device via the IoT server, and finally realize a remote smart control on the smart device.

Due to fluctuations of the network environment, the networking channel is vulnerable to malfunctions, which may result in a situation where a user cannot perform a remote smart control on smart devices. However, a smart device itself usually does not have a display screen, and thus a user cannot directly view the current state of the networking channel or information on causes to such malfunctions on the smart devices. Consequently, the user's experience is affected.

In order to address the above insufficiency, the present disclosure provides the following embodiments.

Fig. 2 is a flowchart showing a method for detecting a state of a networking channel according to an exemplary embodiment. As shown in Fig. 2, the method is applied in a terminal and includes the following steps.

In step 202, a smart device to be detected is determined.

In the present embodiment, a terminal may determine a smart device selected by a user according to detected user operations, and take the selected smart device as a smart device to be detected; or a terminal may judge, on its own initiative, whether detection on a state of a networking channel of a smart device is needed.

As an exemplary embodiment, a terminal sends a control instruction on any one smart device to the IoT server; and according to a control result returned by the IoT server, if the control instruction is not accomplished, the terminal records the any one smart device as the smart device to be detected.

Further, the terminal may detect a real-time network environment; and if the networking channel employed by the smart device to be detected is reachable under the real-time network environment, the terminal performs a detection prompt on the networking channel. Thus, it is guaranteed that a user may detect the state of the networking channel of a smart device in time to maintain the remote controllability of the smart device.

In step 204, an IoT control protocol employed by the smart device to be detected is selected, and an IoT server is accessed via a networking channel employed by the smart device to be dctcctcd.

In the present embodiment, the networking channel may include a local network channel with a local router device, and a cloud end network channel between the local router device and the IoT server. The state of the networking channel may include at least one of the following: an establishment result of a connection with a local network established by the local router device; information on network states of the local network; open states of access ports to the IoT server on the local router device; and response states of the IoT server.

Rather, one of ordinary skill in this art may appreciate that the above networking channel states are only for exemplary illustration and the technical solutions of the present disclosure may collect other types of networking channel states and the present disclosure does not impose a specific limitation on this.

In step 206, a state of the networking channel is collected during accessing, and the collected state is presented on a screen of a terminal.

It can be seen from the above embodiment that, in the present disclosure, the accessing of a smart device to an IoT server is simulated on a terminal, and the state of a networking channel during the accessing step may be presented on a screen of the terminal. Thus, a user may visually view the problems which the networking channel may encounter, and thereby the insufficiency that a smart device cannot present information on the state of the networking channel may be addressed to improve user's use experience.

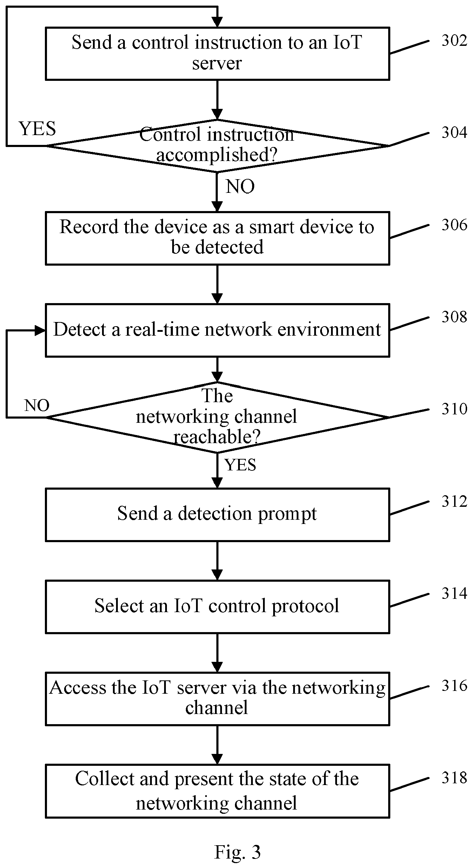

Fig. 3 is a flowchart showing a method for detecting a state of a networking channel according to another exemplary embodiment. As shown in Fig. 3, the method is applied in a terminal and may include the following steps.

In step 302, a terminal sends a control instruction to an IoT server to realize a remote smart control on a smart device A.

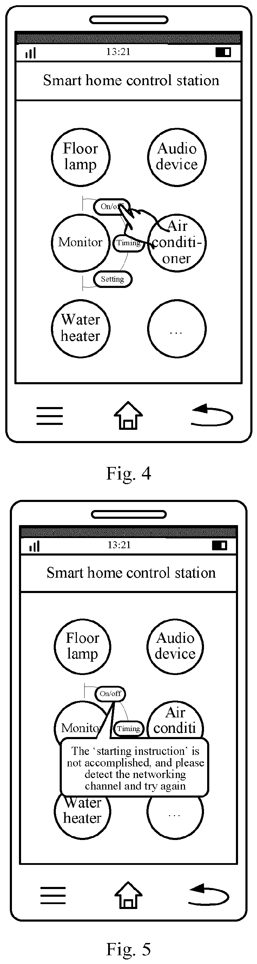

In the present embodiment, as shown in Fig. 4, in an example where a smart camera as a "monitor" is controlled (i.e., the smart device A is a "monitoring" device) by a user, the user may select "monitor" on a mobile phone (or other terminals), and call up menus such as "on/off", "timing", "setting" and so on to send control instructions to the smart device. Assuming that the user selects the "on/off' key in Fig. 4 by tapping, the terminal sends a starting instruction to the IoT server with the control object as the "monitor" smart device.

In step 304, the terminal determines whether the control instruction is accomplished according to the returned information from the IoT server; if the control instruction is accomplished, no process is needed; otherwise, proceed to step 306.

In the present embodiment, the "accomplishment" of a control instruction means that the control instruction sent by a user is performed correctly by a target device. For example, when the user sends a starting instruction, the "monitor" device is successfully turned on or off.

After receiving the control instruction from the terminal, the IoT server sends the control instruction to a corresponding smart device via a networking channel. After accomplishment of the control instruction, the smart device returns a corresponding response message to the IoT server. Accordingly, when the response message received by the IoT server indicates that the control instruction is not accomplished or no response message is received, it is indicated that the control instruction is not accomplished by the smart device. At this time, the terminal may present prompt information as shown in Fig. 5 on a screen, for example, "the 'starting instruction' is not accomplished, please detect the networking channel and try again".

In step 306, the smart device A is recorded as a smart device to be detected.

In the present embodiment, for a smart device which does not accomplish a remote control instruction, the terminal may automatically record the smart device as a smart device to be detected so that states of the networking channels of these smart devices may be detected by the technical solutions of the present disclosure when the network environment condition allows such detection.

In step 308, a real-time network environment where the terminal resides is detected.

In step 310, if the networking channel of the smart device A is reachable under the real-time network environment, proceed to step 312; otherwise, return to step 308.

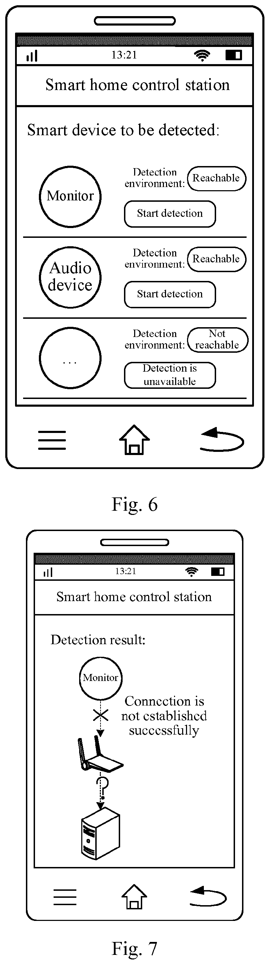

In the present embodiment, as shown in Fig. 6, a user may view the recorded smart devices to be detected on a mobile phone. Meanwhile, for each of the smart devices to be detected, the terminal may determine whether corresponding networking channel is reachable by detecting the real-time network environment where each smart device resides, and the terminal may present the status regarding "whether reachable" on a screen of the terminal. For example, in Fig. 6, the real-time network environment of the smart devices such as "monitor", "audio device" is "reachable", and a user may start detection on the states of the networking channel of these smart devices by tapping "starting detection"; other smart devices arc "not reachable", and thus the user cannot perform detection operation on the states of corresponding networking channels.

For example, with respect to the IoT structure as shown in Fig. 1, if a terminal of a user joins to a local network where a smart camera resides, i.e., a local network which is detected by a local router device, it is indicated that the networking channel corresponding to the smart camera is reachable for the terminal at this time.

In step 312, the terminal initiates a detection prompt on the smart device A to the user.

In the present embodiment, a terminal may prompt a user by any manner such as literal manner, prompt tone, flashing light and the like so as to detect the state of the networking channel of the smart device to be detected as soon as possible.

In step 314, the IoT control protocol employed by the smart device A is selected.

In step 316, the terminal accesses the IoT server by using the selected IoT control protocol via the networking channel of the smart device A.

In the present embodiment, by using the IoT control protocol of the smart device A, the terminal is capable of simulating the interaction between the smart device A and the IoT server, and thereby the real reason why the smart device A cannot be remotely and intelligently controlled can be detected.

In step 318, during the accessing procedure, the state of the networking channel is collected and presented.

In the present embodiment, the networking channel may include a local network channel with a local router device, and a cloud end network channel between the local router device and the IoT server. Accordingly, the detection procedure of the terminal may include two phases: 1) a phase in which a connection with the local router device is established via the local network channel, and 2) a phase in which the IoT server is accessed via the cloud end network channel.

The state of the networking channel may include any information representing the network states of the networking channel. For example, the state of the networking channel may include at least one of the following:
1) an establishment result of a connection with a local network established by the local router device, such as successful establishment, establishment failure, the duration for the establishment, and the like;
2) information on network states of the local network, such as signal strength, data transmission rate and the like;
3) open states of access ports to the IoT server on the local router device, such as whether the local router device opens an access port to the IoT server for the smart device A; and
4) response states of the IoT server, such as whether to respond, the response speed, the response delay, and the like.

Rather, one of ordinary skill in this art will appreciate that the above states of networking channel are only for illustrative purposes, and the technical solutions of the present disclosure may collect other types of states of the networking channel, and the present embodiment does not impose a specific limitation on this.

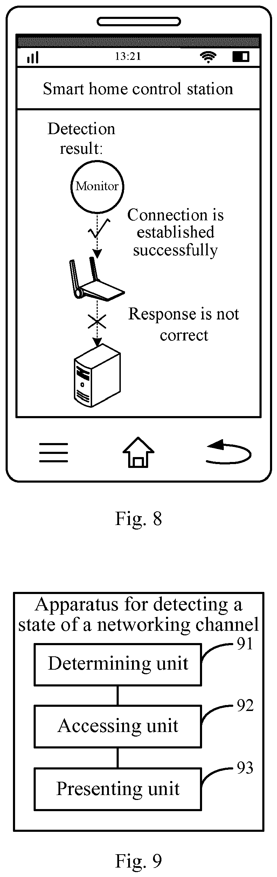

In the present embodiment, based on the detection and obtaining of the state of the networking channel, the terminal may provide an intuitive presentation of the detection results on a screen. For example, according to the terminal interface as shown in Fig. 7, it is indicated that the local network channel is abnormal, for example, the local router device encounters a problem; or according to the terminal interface as shown in Fig. 8, it is indicated that the local network channel is normal, but the cloud end network channel is abnormal, for example, the local router device forbids the access port to the IoT server for the smart device A, or the IoT server is abnormal.

Corresponding to the above-mentioned embodiments of the method for detecting a state of a networking channel, the present disclosure further provides embodiments of an apparatus for detecting a state of a networking channel.

Fig. 9 is a block diagram showing an apparatus for detecting a state of a networking channel according to another exemplary embodiment. As shown in Fig. 9, the apparatus includes a determining unit 91, an accessing unit 92 and a presenting unit 93.

The determining unit 91 is configured to determine a smart device to be detected.

The accessing unit 92 is configured to select an Internet of Things (IoT) control protocol employed by the smart device to be detected, and access an IoT server via a networking channel employed by the smart device to be detected.

The presenting unit 93 is configured to collect a state of the networking channel during accessing, and present the collected state on a screen of a terminal.

Optionally, the networking channel includes a local network channel with a local router device, and a cloud end network channel between the local router device and the IoT server.

Optionally, the state of the networking channel includes at least one of the following:
an establishment result of a connection with a local network established by the local router device; information on network states of the local network; open states of access ports to the IoT server on the local router device; and response states of the IoT server.

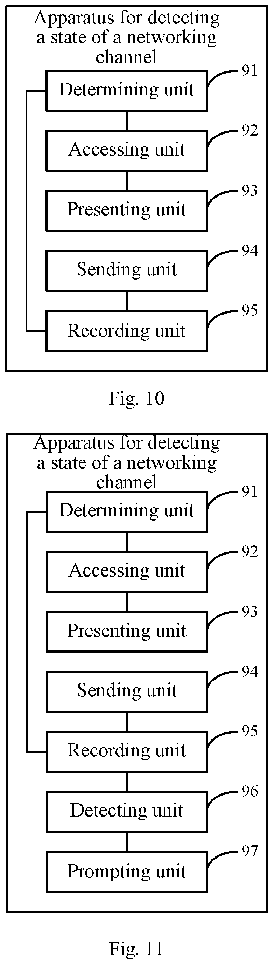

Referring to Fig. 10, Fig. 10 is a block diagram showing an apparatus for detecting a state of a networking channel according to another exemplary embodiment. On the basis of the embodiment as shown in Fig. 9, the apparatus of the present embodiment may further include a sending unit 94 and a recording unit 95.

The sending unit 94 is configured to send a control instruction on any one smart device to the IoT server.

The recording unit 95 is configured to, according to a control result returned by the IoT server, if the control instruction is not accomplished, record the any one smart device as the smart device to be detected.

Referring to Fig. 11, Fig. 11 is a block diagram showing an apparatus for detecting a state of a networking channel according to another exemplary embodiment. On the basis of the embodiment as shown in Fig. 10, the apparatus of the present embodiment may include a detecting unit 96 and a prompting unit 97.

The detecting unit 96 is configured to detect a real-time network environment.

The prompting unit 97 is configured to, if the networking channel employed by the smart device to be detected is reachable under the real-time network environment, perform detection prompt on the networking channel.

The specific manners for respective modules performing operation in the above apparatus of the embodiments have been described in the embodiments relating to the methods, and a duplicate description is omitted herein.

For the embodiments of the apparatus, they substantially correspond to the embodiments of the methods, and thus for description on related parts, please refer to the description on the embodiments of the methods. The above mentioned embodiments of apparatus are only illustrative, the units which are described as separate parts may be or not be physically separated, and the parts shown as units may be or not physical units, i.e., they may be located in the same place or may be distributed over a plurality of network units. All or a part of the modules may be selected to realize the object of the present disclosure according to actual requirements. One of ordinary skill in this art may understand and practice this without paying creative work.

Accordingly, the present disclosure further provides an apparatus for detecting a state of a networking channel, including: a processor; and a memory for storing instructions executable by the processor; wherein the processor is configured to perform: determining a smart device to be detected; selecting an Internet of Things (IoT) control protocol employed by the smart device to be detected, and accessing an IoT server via a networking channel employed by the smart device to be detected; and collecting a state of the networking channel during accessing, and presenting the collected state on a screen of a terminal.

Accordingly, the present disclosure further provides a terminal. The terminal includes a memory and one or more program. The one or more program is stored in the memory, and when executed by one or more processors, the one or more processors are caused to perform instructions including the following operations: determining a smart device to be detected; selecting an Internet of Things (IoT) control protocol employed by the smart device to be detected, and accessing an IoT server via a networking channel employed by the smart device to be dctcctcd; and collecting a state of the networking channel during accessing, and presenting the collected state on a screen of a terminal.

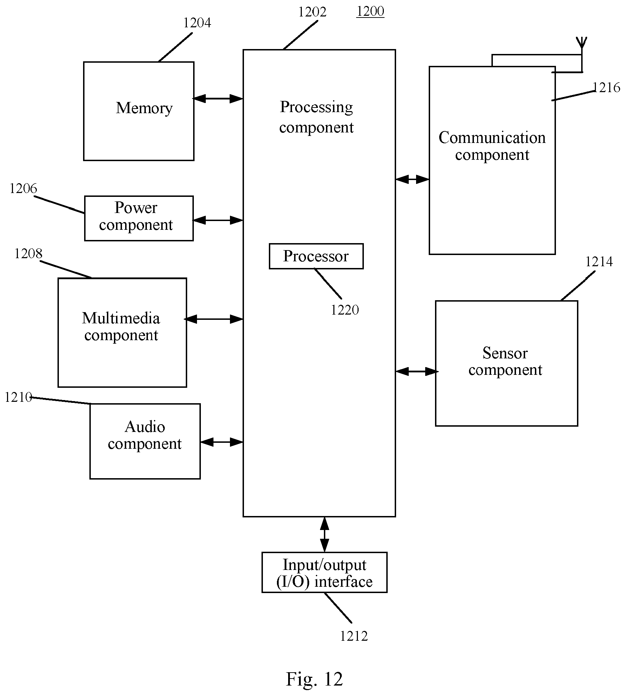

Fig. 12 is a block diagram showing an apparatus 1200 for detecting a state of a networking channel according to another exemplary embodiment. For example, the apparatus 1200 may be a mobile phone, a computer, a digital broadcast terminal, a messaging device, a gaming console, a tablet, a medical device, exercise equipment, a personal digital assistant, and the like.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention falling within the scope of the invention as defined by the appended claims. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method, performed by a terminal, for detecting a state of a networking channel between a smart device and an Internet of Things, IoT, server, wherein the IoT server is a server to which a user can log in, using the terminal, for connecting to the smart device, the method comprising:
selecting (202) the
smart device, by sending (302) a control instruction from the terminal to the IoT server to realize control of any one smart device and recording (306) the any one smart device as the selected smart device if the control instruction is not accomplished;
selecting (204, 314) a control protocol employed by the selected smart device; accessing (316), using the control protocol, the IoT server via the networking channel employed by the selected smart device, such that the terminal simulates an interaction between the selected smart device and the IoT server; and
collecting (204, 318) the state of the networking channel during accessing, and presenting the collected state on a screen of the terminal.

2. The method according to claim 1, **characterized in that** the networking channel comprises a local network channel with a local router device, and a cloud end network channel between the local router device and the IoT server.

3. The method according to claim 2, **characterized in that** the state of the networking channel comprises at least one of the following:
an establishment result of a connection with a local network established by the local router device;
information on network states of the local network;
open states of access ports to the IoT server on the local router device; and
response states of the IoT server.

4. The method according to any preceding claim, wherein the method further comprises:
detecting (308) a real-time network environment; and
if the networking channel employed by the selected smart device is reachable under the real-time network environment, performing (312) a detection prompt on the networking channel.

5. A terminal for detecting a state of a networking channel between a smart device and an Internet of Things, IoT, server, wherein the IoT server is a server to which a user can log in, using the terminal, for connecting to the smart device wherein the terminal comprises:
a determining unit (91) configured to select the smart device,
wherein the terminal comprises a sending unit (94) configured to send a control instruction from the terminal to the IoT server to realize control of any one smart device; and
a recording unit (95) configured to, according to a control result returned by the IoT server, if the control instruction is not accomplished, record the any one smart device as the selected smart device;
an accessing unit (92) configured to select a control protocol employed by the smart device, and access, using the control protocol, the IoT server via the
networking channel employed by
the selected smart device, such that the terminal simulates an interaction between the selected smart device and the IoT server; and
a presenting unit (93) configured to collect the
state of the networking channel during
accessing, and present the collected state on a screen of the terminal.

6. The terminal according to claim 5, **characterized in that** the networking channel comprises a local network channel with a local router device, and a cloud end network channel between the local router device and the IoT server.

7. The terminal according to claim 6, **characterized in that** the state of the networking channel comprises at least one of the following:
an establishment result of a connection with a local network established by the local router device;
information on network states of the local network;
open states of access ports to the IoT server on the local router device; and
response states of the IoT server.

8. The terminal according to any of the claims 5-7, wherein the terminal further comprises:
a detecting unit (96) configured to detect a real-time network environment; and
a prompting unit (97) configured to, if the networking channel employed by the selected smart device is reachable under the real-time network environment, perform a detection prompt on the networking channel.

9. A computer program stored on a computer readable medium, which when executed on a terminal device, is configured to perform the method according to any of claims 1 to 4.

## Patentansprüche

1. Verfahren, von einem Endgerät durchgeführt, zum Erkennen eines Zustands eines Netzwerkkanals zwischen einem Smart-Gerät und einem Internet-der-Dinge- (Internet of Things), IoT, -Server, wobei der IoT-Server ein Server ist, bei dem sich ein Benutzer unter Verwendung des Endgeräts zur Verbindung mit dem Smart-Gerät anmelden kann, wobei das Verfahren umfasst:
Auswählen (202) des Smart-Geräts durch Senden (302) einer Steueranweisung von dem Endgerät an den IoT-Server, um die Steuerung eines beliebigen Smart-Geräts zu realisieren, und Aufzeichnen (306) des einen beliebigen Smart-Geräts als das ausgewählte Smart-Gerät, wenn die Steueranweisung nicht ausgeführt wird;
Auswählen (204, 314) eines von dem ausgewählten Smart-Gerät eingesetzten Steuerungsprotokolls;
Zugreifen (316) auf den loT-Server, unter Verwendung des Steuerungsprotokolls, über den von dem ausgewählten Smart-Gerät eingesetzten Netzwerkkanal, so dass das Endgerät eine Interaktion zwischen dem ausgewählten Smart-Gerät und dem IoT-Server simuliert; und
Erfassen (204, 318) des Zustands des Netzwerkkanals während des Zugreifens und Darstellen des erfassten Zustands auf einem Bildschirm des Endgeräts.

2. Verfahren nach Anspruch 1, **dadurch gekennzeichnet, dass** der Netzwerkkanal einen lokalen Netzwerkkanal mit einer lokalen Routervorrichtung und einen Cloud-seitigen Netzwerkkanal zwischen der lokalen Routervorrichtung und dem IoT-Server umfasst.

3. Verfahren nach Anspruch 2, **dadurch gekennzeichnet, dass** der Zustand des Netzwerkkanals mindestens eines der folgenden umfasst:
ein Aufbauergebnis einer von der lokalen Routervorrichtung aufgebauten Verbindung mit einem lokalen Netzwerk;
Informationen über Netzwerkzustände des lokalen Netzwerks;
offene Zustände von Zugangsports zu dem IoT-Server an der lokalen Routervorrichtung; und
Antwortzustände des IoT-Servers.

4. Verfahren nach einem der vorhergehenden Ansprüche, wobei das Verfahren ferner Folgendes umfasst:
Erkennen (308) einer Echtzeit-Netzwerkumgebung; und,
wenn der von dem ausgewählten Smart-Gerät eingesetzte Netzwerkkanal unter der Echtzeit-Netzwerkumgebung erreichbar ist, Durchführen (312) einer Erkennungsaufforderung auf dem Netzwerkkanal.

5. Endgerät zum Erkennen eines Zustands eines Netzwerkkanals zwischen einem Smart-Gerät und einem Internet-der-Dinge- (Internet of Things), IoT, -Server, wobei der IoT-Server ein Server ist, bei dem sich ein Benutzer unter Verwendung des Endgeräts zur Verbindung mit dem Smart-Gerät anmelden kann, wobei das Endgerät umfasst:
eine Bestimmungseinheit (91), die zum Auswählen des Smart-Geräts konfiguriert ist, wobei das Endgerät eine Sendeeinheit (94) umfasst, die zum Senden einer Steueranweisung von dem Endgerät an den IoT-Server, um die Steuerung eines beliebigen Smart-Geräts zu realisieren, konfiguriert ist; und
eine Aufzeichnungseinheit (95), die zum Aufzeichnen des einen beliebigen Smart-Geräts als das ausgewählte Smart-Gerät gemäß einem von dem IoT-Server her erhaltenen Steuerergebnis, wenn die Steueranweisung nicht ausgeführt wird, konfiguriert ist;
eine Zugriffseinheit (92), die zum Auswählen eines von dem Smart-Gerät eingesetzten Steuerungsprotokolls und zum Zugreifen auf den loT-Server, unter Verwendung des Steuerungsprotokolls, über den von dem ausgewählten Smart-Gerät eingesetzten Netzwerkkanal, so dass das Endgerät eine Interaktion zwischen dem ausgewählten Smart-Gerät und dem IoT-Server simuliert; und
eine Darstellungseinheit (93), die zum Erfassen des Zustands des Netzwerkkanals während des Zugreifens und Darstellen des erfassten Zustands auf einem Bildschirm des Endgeräts konfiguriert ist.

6. Endgerät nach Anspruch 5, **dadurch gekennzeichnet, dass** der Netzwerkkanal einen lokalen Netzwerkkanal mit einer lokalen Routervorrichtung und einen Cloud-seitigen Netzwerkkanal zwischen der lokalen Routervorrichtung und dem IoT-Server umfasst.

7. Endgerät nach Anspruch 6, **dadurch gekennzeichnet, dass** der Zustand des Netzwerkkanals mindestens eines der folgenden umfasst:
ein Aufbauergebnis einer von der lokalen Routervorrichtung aufgebauten Verbindung mit einem lokalen Netzwerk;
Informationen über Netzwerkzustände des lokalen Netzwerks;
offene Zustände von Zugangsports zu dem IoT-Server an der lokalen Routervorrichtung; und
Antwortzustände des IoT-Servers.

8. Endgerät nach einem der Ansprüche 5 bis 7, wobei das Endgerät ferner Folgendes umfasst:
eine Erkennungseinheit (96), die zum Erkennen einer Echtzeit-Netzwerkumgebung konfiguriert ist; und
eine Aufforderungseinheit (97), die zum Durchführen einer Erkennungsaufforderung auf dem Netzwerkkanal, wenn der von dem ausgewählten Smart-Gerät eingesetzte Netzwerkkanal unter der Echtzeit-Netzwerkumgebung erreichbar ist, konfiguriert ist.

9. Computerprogramm, auf einem computerlesbaren Medium gespeichert, das bei Ausführung auf einer Endgerätvorrichtung zum Durchführen des Verfahrens nach einem der Ansprüche 1 bis 4 konfiguriert ist.

## Revendications

1. Procédé, exécuté par un terminal, pour détecter un état d'un canal de réseautique entre un dispositif intelligent et un serveur Internet des Objets (IdO), dans lequel le serveur IdO est un serveur auquel un utilisateur peut se connecter, en utilisant le terminal, pour connexion au dispositif intelligent, le procédé comprenant :
sélectionner (202) le dispositif intelligent, en envoyant (302) une instruction de commande du terminal au serveur IdO pour réaliser la commande d'un dispositif intelligent quelconque et enregistrer (306) le dispositif intelligent quelconque comme le dispositif intelligent sélectionné si l'instruction de commande n'est pas accomplie ;
sélectionner (204, 314) un protocole de commande utilisé par le dispositif intelligent sélectionné ;
accéder (316), en utilisant le protocole de commande, au serveur IdO via le canal de réseautique utilisé par le dispositif intelligent sélectionné, de telle sorte que le terminal simule une interaction entre le dispositif intelligent sélectionné et le serveur IdO ; et
recueillir (204, 318) l'état du canal de réseautique durant l'accès et présenter l'état recueilli sur un écran du terminal.

2. Procédé selon la revendication 1, **caractérisé en ce que** le canal de réseautique comprend un canal de réseau local avec un dispositif routeur local, et un canal réseau à extrémité cloud entre le dispositif routeur local et le serveur IdO.

3. Procédé selon la revendication 2, **caractérisé en ce que** l'état du canal de réseautique comprend au moins l'un des suivants :
un résultat d'établissement d'une connexion avec un réseau local établie par le dispositif routeur local ;
une information sur les états réseau du réseau local ;
des états ouverts de ports d'accès au serveur IdO sur le dispositif routeur local ; et
des états de réponse du serveur IdO.

4. Procédé selon l'une quelconque des revendications précédentes, où le procédé comprend en outre :
détecter (308) un environnement réseau en temps réel ; et
si le canal de réseautique utilisé par le dispositif intelligent sélectionné peut être atteint dans un environnement réseau en temps réel, exécuter (312) une invite de détection sur le canal de réseautique.

5. Terminal pour détecter un état d'un canal de réseautique entre un dispositif intelligent et un serveur d'internet des objets, IdO, dans lequel le serveur IdO est un serveur auquel un utilisateur peut se connecter, en utilisant le terminal, pour connexion au dispositif intelligent, où le terminal comprend :
une unité de détermination (91) configurée pour sélectionner le dispositif intelligent,
où le terminal comprend une unité d'envoi (94) configurée pour envoyer une instruction de commande du terminal au serveur IdO pour réaliser la commande d'un dispositif intelligent quelconque ; et
une unité d'enregistrement (95) configurée pour, conformément à un résultat de commande renvoyé par le serveur IdO, si l'instruction de commande n'est pas accomplie, enregistrer le dispositif intelligent quelconque comme le dispositif intelligent sélectionné ;
une unité d'accès (92) configurée pour sélectionner un protocole de commande utilisé par le dispositif intelligent, et accéder, en utilisant le protocole de commande, au serveur IdO via le canal de réseautique utilisé par le dispositif intelligent sélectionné, de telle sorte que le terminal simule une interaction entre le dispositif intelligent sélectionné et le serveur IdO ; et
une unité de présentation (93) configurée pour recueillir l'état du canal de réseautique durant l'accès, et présenter l'état recueilli sur un écran du terminal.

6. Terminal selon la revendication 5, **caractérisé en ce que** le canal de réseautique comprend un canal de réseau local avec un dispositif routeur local, et un canal réseau à extrémité en nuage entre le dispositif routeur local et le serveur IdO.

7. Terminal selon la revendication 6, **caractérisé en ce que** l'état du canal de réseautique comprend au moins l'un des suivants :
un résultat d'établissement d'une connexion avec un réseau local établie par le dispositif routeur local ;
une information sur des états de réseau du réseau local ;
des états ouverts de ports d'accès au serveur IdO sur le dispositif routeur local ; et
des états de réponse du serveur IdO.

8. Terminal selon l'une quelconque des revendications 5-7, où le terminal comprend en outre :
une unité de détection (96) configurée pour détecter un environnement réseau en temps réel ; et
une unité d'invite (97) configurée pour, si le canal de réseautique utilisé par le dispositif intelligent sélectionné peut être atteint dans l'environnement réseau en temps réel, exécuter une invite de détection sur le canal de réseautique.

9. Programme informatique stocké sur un support lisible par ordinateur qui, lorsque exécuté sur un dispositif terminal, est configuré pour exécuter le procédé selon l'une quelconque des revendications 1 à 4.
